(19) Europäisches Patentamt / European Patent Office / Office européen des brevets

(11) **EP 3 325 176 B1**

(12) **EUROPÄISCHE PATENTSCHRIFT**

(45) Veröffentlichungstag und Bekanntmachung des Hinweises auf die Patenterteilung:
**04.11.2020** **Patentblatt 2020/45**

(21) Anmeldenummer: **16750388.7**

(22) Anmeldetag: **15.07.2016**

(51) Int Cl.:
**B05D 7/00** (2006.01)   **B05D 7/14** (2006.01)

(86) Internationale Anmeldenummer:
**PCT/EP2016/066983**

(87) Internationale Veröffentlichungsnummer:
**WO 2017/013041 (26.01.2017 Gazette 2017/04)**

(54) **VERFAHREN ZUR HERSTELLUNG EINER AUS FÜLLER- UND DECKLACKSCHICHT BESTEHENDEN BESCHICHTUNG**

METHOD FOR MANUFACTURING A COATING MADE OF A FILLER AND COVERING VARNISH LAYER

PROCEDE DE FABRICATION D'UN REVETEMENT COMPRENANT UNE MATIERE DE CHARGE ET UNE COUCHE DE VERNIS DE RECOUVREMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2015   EP 15177765**

(43) Veröffentlichungstag der Anmeldung:
**30.05.2018   Patentblatt 2018/22**

(73) Patentinhaber: **BASF Coatings GmbH**
**48165 Münster (DE)**

(72) Erfinder:
• **HANNING, Andreas**
  **48249 Dülmen (DE)**
• **MAYER, Bernd**
  **48165 Münster (DE)**
• **SENDKER, Meinolf**
  **48165 Münster (DE)**
• **VIETZE, Carsten**
  **48316 Drensteinfurt (DE)**
• **WIESING, Reinhard**
  **48167 Münster (DE)**

(74) Vertreter: **BASF IP Association**
**BASF SE**
**GBI-C006**
**67056 Ludwigshafen (DE)**

(56) Entgegenhaltungen:
**EP-A1- 0 513 814     EP-A2- 0 512 562**

**Beschreibung**

Die vorliegende Erfindung betrifft ein Verfahren zur Herstellung einer aus einer Füller- und Decklackschicht bestehenden Beschichtung auf einem Substrat sowie ein nach dem erfindungsgemäßen Verfahren beschichtetes Substrat. Bei dem Substrat handelt es sich vorzugsweise um die Karosserie oder die Kabine eines Kraftfahrzeugs oder um einen Bestandteil einer solchen. Das erfindungsgemäße Verfahren eignet sich insbesondere zur Herstellung von Beschichtungen auf Personenkraftwagen und Nutzfahrzeugen, wie Lastkraftwagen, Vans oder Omnibussen.

Aus dem Stand der Technik ist bekannt, dass Karosserien oder Kabinen von Kraftfahrzeugen üblicherweise in einem mehrstufigen Verfahren beschichtet werden, aus denen eine Mehrschichtlackierung resultiert. Diese bekannten Lackierverfahren weisen dabei üblicherweise die nachfolgenden Schritte auf:

1) Phosphatierung des Substrats;
2) Aufbringen einer kathodischen Elektrotauchlackschicht und Härtung der Elektrotauchlackschicht, wodurch eine korrosionsschützende Elektrotauchbeschichtung resultiert;
3) Applikation eines Beschichtungsstoffes zur Ausbildung einer Füllerschicht. Die Applikation erfolgt üblicherweise in 2 Spritzgängen. Nach der Applikation wird die resultierende Füllerschicht zunächst abgelüftet (Flash-Off-Zeit) und anschließend unter Ausbildung einer gehärteten Füllerschicht thermisch (bei z.B. 60 bis 150 °C) gehärtet. Typische Schichtdicken der gehärteten Füllerschicht liegen zwischen 30 $\mu$m und 80 $\mu$m. Letztere Schichtdicken werden verwendet, wenn ein Schliff der gehärteten Füllerschicht geplant ist;
4)

a) Applikation eines Beschichtungsstoffs zur Ausbildung einer einschichtigen Decklackschicht. Die Applikation erfolgt üblicherweise in mindestens 2 Spritzgängen. Beschichtungsstoffe zur Ausbildung einschichtiger Decklackschichten sind meist unifarben pigmentiert. Nach der Applikation wird die resultierende Decklackschicht zunächst abgelüftet und anschließend thermisch gehärtet. Typische Schichtdicken der gehärteten Decklackschicht liegen je nach Farbton und Deckvermögen zwischen 50 und 80 $\mu$m.
b) Alternativ zu a) kann auch die Applikation eines Beschichtungsstoffs zur Ausbildung einer Basislackschicht mit anschließender Applikation eines Beschichtungsstoffs zur Ausbildung einer Klarlackschicht durchgeführt werden. Die Basislackschichten werden vor der Applikation des Beschichtungsstoffs zur Ausbildung der Klarlackschicht abgelüftet und erreichen Schichtdicken von etwa 10 bis 20 $\mu$m. In Bezug auf die Flash-Off-Zeiten gilt im Allgemeinen, dass eine Verlängerung der Flash-Off Zeit zu einer verbesserten Appearance der darüber liegenden Klarlackschicht führt. Nach einer entsprechenden Flash-Off Zeit erfolgt die Applikation eines Beschichtungsstoff zur Ausbildung einer Klarlackschicht. Diese wird gegebenenfalls abgelüftet und anschließend thermisch gehärtet. Typische Schichtdicken für die gehärtete Klarlackschicht liegen etwa bei 50 $\mu$m.

5) Alternativ zur Kombination der Punkte 3 und 4a werden auch Decklackschichten direkt, d.h. ohne gehärtete Füllerschicht, auf die gehärtete kathodische Elektrotauchlackschicht appliziert. Die fehlende gehärtete Füllerschicht erlaubt jedoch zum Beispiel die Transmission von UV-Strahlen, die zur Kreidung der gehärteten Elektrotauchlackschicht und zu Haftungsverlust führen kann. Eine Erhöhung der UV-Absorber-Menge würde zu deutlich höheren Materialkosten führen. Für den Fall, dass verschiedene Substrate oder unterschiedliche Untergründe zum Einsatz kommen, muss insbesondere bei schlechter deckenden Farbtönen eine deutliche höhere Schichtdicke zur Erlangung der gewünschten Deckfähigkeit aufgetragen werden. Diese Option scheidet aus Qualitäts- bzw. Kostengründen für qualitativ hochwertige Anwendungen aus.
6) Alternativ zur Kombination der Punkte 3 und 4a werden sogenannte "integrierte Lackierverfahren" verwendet, bei denen die Eigenschaften der gehärteten Füllerschicht durch Aufbringen einer ersten Basislackschicht erzielt werden. In diesen integrierten Verfahren erfolgt zunächst die Applikation eines Beschichtungsstoffs zur Ausbildung der ersten Basislackschicht, der z.B. keine EffektPigmente enthält, dafür aber zusätzliche funktionale Füllstoffe. Diese erste Basislackschicht wird gegebenenfalls vor Applikation eines Beschichtungsstoffes zur Ausbildung einer zweiten Basislackschicht abgelüftet. Die Trockenschichtdicke der ersten Basislackschicht liegt bei etwa 20 $\mu$m. Anschließend erfolgt die Applikation eines weiteren Beschichtungsstoffes zur Ausbildung einer zweiten Basislackschicht. Diese dient zur Einstellung des Farbtons. Die Trockenschichtdicke dieser zweiten Basislackschicht ist üblicherweise kleiner als 20 $\mu$m. Nach Applikation des zweiten Beschichtungsstoffs zur Ausbildung der zweiten Basislackschicht werden die erste und die zweite Basislackschicht in einer Flash-Off Zone mindestens bis zur Staubtrockenheit abgelüftet. Im Anschluss erfolgt die Applikation eines unpigmentierten Beschichtungsstoffes zur Ausbildung einer Klarlackschicht. Diese wird gegebenenfalls wiederum abgelüftet bevor die abschließende thermische Härtung dieser Schicht erfolgt.

Die in den zuvor beschriebenen Schritten verwendeten Beschichtungsstoffe enthalten prinzipiell mehrere Bestandteile: Bindemittel, Pigmente und Füllstoffe sowie Lösemittel, wobei mögliche Additive gemäß der Definition des Begriffs Bindemittel zu den Bindemitteln gezählt werden. Bindemittel sind prinzipiell für die Ausbildung eines vernetzten Films auf einem Substrat verantwortlich. Unter dem Begriff Hauptbindemittel ist der Bestandteil des Bindemittels zu verstehen, der hauptsächlich für die Ausbildung eines vernetzen Films verantwortlich ist. Prinzipiell können Beschichtungsstoffe physikalisch härtend, selbstvernetzend oder fremdvernetzend sein. Generell werden Beschichtungsstoffe unterschieden in 1-Komponentensysteme (1-K) und 2-Komponentensysteme (2-K). Als 2-K-Systeme werden alle Beschichtungsstoffe bezeichnet, denen zur Härtung des Beschichtungsstoffs kurz vor der Verarbeitung eine Vernetzerkomponente hinzugefügt werden muss. Die übrigen Beschichtungsstoffe, denen kurz vor der Verarbeitung zur Härtung des Beschichtungsstoffs keine Vernetzerkomponente hinzugefügt werden wird, werden als 1-K-Systeme bezeichnet. Im Falle von 2-Komponentenbeschichtungsstoffen bilden sowohl die zu vernetzende Komponente als der entsprechende Vernetzer das Hauptbindemittel.

In Bezug auf das Lösemittel besteht generell die Möglichkeit, dass die Beschichtungsstoffe im Wesentlichen lösemittelbasiert vorliegen oder im Wesentlichen wässrig sind.

Die zuvor beschriebenen Beschichtungsverfahren aus dem Stand der Technik zur Herstellung einer Beschichtung aus 2 oder mehr Schichten, haben gemeinsam, dass dass die Applikation eines Beschichtungsstoffes auf eine bereits zuvor applizierte Schicht immer erst vorgenommen wird, wenn diese Schicht mindestens Staubtrockenheit erreicht hat. Dies sorgt dafür, dass die Beschichtungsstoffe der unterschiedlichen Schichten im flüssigen Zustand nicht miteinander verträglich sein müssen und ermöglicht die unterschiedlichsten Beschichtungsstoffe in den verschiedenen Schichten miteinander zu kombinieren. So ist es beispielsweise möglich wässrige Beschichtungsstoffe mit lösemittelhaltigen Beschichtungsstoffen zu kombinieren oder Epoxid-basierte Bindemittel mit Polyurethan-basierten Bindemitteln zu kombinieren. Fälschlicherweise werden in der Literatur oftmals Beschichtungsverfahren, in denen ein Beschichtungsstoff auf eine bereits bestehende Schicht appliziert wird, die noch nicht vollständig gehärtet ist, als sogenannte "nass-in-nass"-Verfahren bezeichnet.

Des Weiteren werden kommerziell sogenannte "nass-in-nass" Produkte zur Herstellung einer Füllerschicht und einer Decklackschicht angeboten. Auch diese Produkte erfordern zwingend das Ablüften der Füllerschicht mindestens bis zur Staubtrockenheit (nicht aber eine thermische Härtung) bevor eine Decklackschicht appliziert werden kann. Demzufolge ist auch hier der Begriff "nass-in-nass" irreführend und wird nicht korrekt angewendet.

In Abhängigkeit vom gewünschten Eigenschaftsprofil der Mehrschichtlackierung können nahezu unabhängig voneinander Beschichtungsstoffe für die einzelnen Schichten ausgewählt werden. Die zuvor beschriebenen bewährten Lackierverfahren bieten damit sehr komplexe Variationsmöglichkeiten, um auch sehr spezielle Anforderungen an eine Mehrschichtlackierung erfüllen zu können.

Aufgrund der zahlreichen Variationsmöglichkeiten, enthalten sie allerdings auch zahlreiche Fehlermöglichkeiten, die nur durch aufwändige und damit teure Korrekturschritte behoben werden können. Mögliche Fehlerquellen sind beispielsweise Fehler in der Füllerapplikation, die durch Schleifen der gehärteten Füllerschicht vor der Decklackapplikation behoben werden müssen. Auch werden während des Lackierprozesses Karosserien oder deren Bestandteile prozessbedingt in sogenannten Pufferzonen zwischengelagert und können dabei verschmutzen. Dies birgt die Gefahr, dass beispielsweise auf eine nicht ausreichend gereinigte Oberfläche ein Beschichtungsstoff zur Ausbildung einer Decklackschicht appliziert wird und die gehärtete Decklackschicht anschließend Oberflächenstörungen zeigt. Diese müssen dann wiederum aufwändig beseitigt werden.

Aus EP 0 512 562 A2 ist ein Verfahren zur Bildung eines Überzugsfilms auf einem Substrat bekannt. Dieser ist erhältlich durch aufeinanderfolgende Aufträge eines pigmentierten Basislacks und eines klaren Decklacks auf das Substrat. Im Anschluss werden beide Schichten gemeinsam eingebrannt.

Der vorliegenden Erfindung lag somit die Aufgabe zugrunde, ein neues Verfahren zur Herstellung einer Mehrschichtlackierung bereitzustellen, das sich durch eine geringe Komplexität sowie eine Verringerung von Fehlermöglichkeiten auszeichnet. Gleichzeitig sollen mit dem erfindungsgemäßen Verfahren Prozesszeiten und - kosten verringert werden. Das Eigenschaftsprofil der resultierenden Mehrschichtlackierung soll mindestens vergleichbar zu den mit den aus dem Stand der Technik bekannten Lackierverfahren erzeugten Mehrschichtlackierungen sein. Insbesondere sollen die mit dem erfindungsgemäßen Verfahren hergestellten Mehrschichtlackierungen hinsichtlich ihrer optischen Eigenschaften (Appearance, Glanz, Verlauf etc.) und ihrer mechanisch technologischen Eigenschaften, wie beispielsweise Witterungsbeständigkeit und Chemikalienbeständigkeit, mindestens vergleichbar zu Beschichtungen sein, die mit Verfahren aus dem Stand der Technik hergestellt werden.

Die Aufgabe konnte gelöst werden durch Bereitstellung eines Verfahrens zur Herstellung einer aus einer gehärteten Füllerschicht und Decklackschicht bestehenden Beschichtung auf einem Substrat durch

    i) Herstellung eines Beschichtungssystems, wobei

        i-a) in einem ersten Schritt auf das unbehandelte oder mindestens mit einer gehärteten Tauchlackschicht beschichtete Substrat ein wenigstens ein farbgebendes Pigment enthaltender Beschichtungsstoff, enthaltend mindestens ein selbstvernetzendes, fremdvernetzendes oder physikalisch trocknendes Bindemittel als Hauptbindemittel, unter Ausbildung einer Füllerschicht aufgebracht wird,

i-b) in einem zweiten Schritt auf die Füllerschicht ein weiterer wenigstens ein farbgebendes Pigment enthaltender Beschichtungsstoff, enthaltend mindestens ein selbstvernetzendes, fremdvernetzendes oder physikalisch trocknendes Bindemittel als Hauptbindemittel, unter Ausbildung einer Decklackschicht aufgebracht wird, und

ii) das in Schritt i) hergestellte Beschichtungssystem unter Ausbildung der Beschichtung gehärtet wird,

dadurch gekennzeichnet, dass die in i-a) und i-b) verwendeten Beschichtungsstoffe in dem Beschichtungssystem verträglich nach DIN EN ISO 12944-5:2008-01 sind, und

der Auftrag des Beschichtungsstoffs zur Ausbildung der Decklackschicht in i-b) erfolgt, bevor der Beschichtungsstoff zur Ausbildung der Füllerschicht in i-a) Trockenstufe 1 nach DIN 53150:2002-09 erreicht hat, wobei die Trockenstufe nach EN ISO 9117-3:2010 bestimmt wird.

Ein weiterer Gegenstand der vorliegenden Erfindung ist ein Verfahren zur Herstellung einer aus einer gehärteten Füllerschicht und Decklackschicht bestehenden Beschichtung auf einem Substrat durch

i) Herstellung eines Beschichtungssystems, wobei

i-a) in einem ersten Schritt auf das unbehandelte oder mindestens mit einer gehärteten Tauchlackschicht beschichtete Substrat Beschichtungsstoff, enthaltend mindestens ein selbstvernetzendes, fremdvernetzendes oder physikalisch trocknendes Bindemittel als Hauptbindemittel, unter Ausbildung einer Füllerschicht aufgebracht wird,

i-b) in einem zweiten Schritt auf die Füllerschicht ein weiterer Beschichtungsstoff, enthaltend mindestens ein selbstvernetzendes, fremdvernetzendes oder physikalisch trocknendes Bindemittel als Hauptbindemittel, unter Ausbildung einer Decklackschicht aufgebracht wird, und

ii) das in Schritt i) hergestellte Beschichtungssystem unter Ausbildung der Beschichtung gehärtet wird,

dadurch gekennzeichnet, dass die in i-a) und i-b) verwendeten Beschichtungsstoffe in dem Beschichtungssystem verträglich nach DIN EN ISO 12944-5:2008-01 sind, und

der Auftrag des Beschichtungsstoffs zur Ausbildung der Decklackschicht in i-b) erfolgt, bevor der Beschichtungsstoff zur Ausbildung der Füllerschicht in i-a) Trockenstufe 1 nach DIN 53150:2002-09 erreicht hat, wobei die Trockenstufe nach EN ISO 9117-3:2010 bestimmt wird.

Im Sinne der vorliegenden Anmeldung werden folgende Begriffsdefinitionen eingeführt:

Der Begriff Beschichtung beschreibt die Gesamtheit der gehärteten Schichten, die auf ein Substrat aufzutragen sind oder aufgetragen wurden. Unter dem Begriff Schicht ist eine durchgehende Schicht, die durch ein- oder mehrmaliges Auftragen von einem Beschichtungsstoff auf ein Substrat entsteht, zu verstehen. Durch Härtung wird eine Schicht in eine gehärtete Schicht überführt. Bei einer Beschichtung, die lediglich eine gehärtete Schicht aufweist, sind die Begriffe Beschichtung und gehärtete Schicht synonym.

Unter dem Begriff Beschichtungssystem ist die Gesamtheit der Schichten aus Beschichtungsstoffen, die auf ein Substrat aufzutragen sind oder aufgetragen wurden, zu verstehen.

Ein Beschichtungsstoff ist ein flüssiges Produkt, das, auf einem Untergrund aufgetragen eine Schicht ergibt. Nach Härtung resultiert aus dieser Schicht eine gehärtete Schicht. Werden mehrere Beschichtungsstoffe nacheinander jeweils unter Ausbildung einer Schicht aufgetragen, resultiert ein Beschichtungssystem. Wird dieses Beschichtungssystem gehärtet, resultiert eine Beschichtung bestehend aus den jeweiligen gehärteten Schichten. Zur Vereinfachung der Bezeichnungen werden die Beschichtungsstoffe zur Ausbildung der jeweiligen Schicht auch nach dieser benannt, dies bedeutet, dass ein Beschichtungsstoff zur Ausbildung der Füllerschicht als Füller bezeichnet wird und ein Beschichtungsstoff zur Ausbildung einer Decklackschicht als Decklack bezeichnet wird.

Unter Ablüften ist das partielle Verdunsten der flüchtigen Anteile eines Beschichtungsstoffs, ehe die Filmbildung vollendet ist und/oder ein weiteres Beschichtungsmittel aufgebracht wird, zu verstehen. Die Ablüftzeit wird auch als Flash-Off-Zeit bezeichnet.

Unter Härtung bzw. physikalischer Trocknung ist der ganze Komplex an Vorgängen, Reaktionsabläufen, Umwandlungen usw. zu verstehen, der mit dem Übergang des flüssig applizierten Beschichtungsstoffs in einen festen, am Untergrund gut haftenden Film einhergeht. Das Ergebnis der Härtung ist ein vernetzter Film. Dies kann durch chemische oder physikalische Vernetzung, d. h. die Verschlaufung von Polymerketten durch vollständiges Entfernen des Lösemittels, erreicht werden.

Der allgemeine Begriff Bindemittel ist nach der DIN 4618:2007-03 der nichtflüchtige Anteil eines Beschichtungsstoffes ohne Pigmente und Füllstoffe. Der Begriff Festkörper beschreibt den nichtflüchtigen Anteil eines Beschichtungsstoffs.

Es ist erfindungswesentlich, dass die in Schritt i-a) und i-b) verwendeten Beschichtungsstoffe im Beschichtungssystem gemäß DIN EN ISO 12944-5:2008-01 verträglich sind. Verträglichkeit im Sinne dieser Erfindung bedeutet die Eigenschaft zweier oder mehrerer Beschichtungsstoffe, in einem Beschichtungssystem verwendet zu werden, ohne dass unerwünschte Nebeneffekte auftreten.

Es ist weiterhin erfindungswesentlich, dass der Auftrag des Beschichtungsstoffs zur Ausbildung der Decklackschicht in i-b) erfolgt, bevor der Beschichtungsstoff zur Ausbildung der Füllerschicht in i-a) Trockenstufe 1 nach DIN 53150:2002-09 erreicht hat, wobei die Trockenstufe nach EN ISO 9117-3:2010 bestimmt wird. Gemäß der DIN 53150:2002-09 ist die Trockenstufe 1 erreicht, wenn sich aufgestreute Glasperlen einer definierten Größe mit einem weichen Haarpinsel leicht und restlos ohne Beschädigung der Oberfläche wieder entfernen lassen. Synonym für den Begriff der Trockenstufe 1 wird auch der Begriff der Staubtrockenheit verwendet.

Im erfindungsgemäßen Verfahren erfolgt in Schritt i) zunächst die Herstellung eines Beschichtungssystems. Dazu wird in Schritt i-a) auf ein unbehandeltes oder mindestens mit einer gehärteten Tauchlackschicht beschichtetes Substrat ein wenigstens ein farbgebendes Pigment enthaltender Beschichtungsstoff unter Ausbildung einer Füllerschicht aufgebracht.

Die Füllerschicht dient dazu, eventuell vorhandene Unebenheiten und/oder Farbtonunterschiede des Substrats zu egalisieren. Gleichzeitig wirkt diese Schicht, wenn sie im gehärteten Zustand vorliegt, energieabsorbierend und schützt die darunterliegende Substratoberfläche vor UV-Transmission.

In Schritt i-b) wird in einem zweiten Schritt ein weitere wenigstens ein farbgebendes Pigment enthaltender Beschichtungsstoff unter Ausbildung einer Decklackschicht aufgebracht.

Es ist dabei erfindungswesentlich, dass der Auftrag des Beschichtungsstoff zur Ausbildung der Decklackschicht auf die Füllerschicht erfolgt, bevor der Beschichtungsstoff zur Ausbildung der Füllerschicht die Trockenstufe 1 nach DIN 53150:2002-09 erreicht hat, wobei die Trockenstufe nach EN ISO 9117-3:2010 bestimmt wird.

Dies hat zur Folge, dass ein direkter "nass-in-nass" Auftrag der beiden Beschichtungsstoffe erfolgt, so dass sich zwischen der Füllerschicht und der Decklackschicht keine diskrete Grenzschicht ausbildet. Damit ist die Zwischenschichthaftung zwischen der gehärteten Füllerschicht und der gehärteten Decklackschicht automatisch gegeben.

Prozessbedingt ergeben sich unvermeidliche Flash-Off-Zeiten zwischen den Schritten i-a) und i-b), die aus den Taktzeiten beim Aufbringen der Beschichtungsstoffe resultieren und durch gegebenenfalls zusätzliche Operationen, wie die Vorbeschichtung an kritischen Stellen, wie z.B. an Sicken und Kanten. Diese unvermeidlichen Ablüftzeiten verschlechtern im Gegensatz zu den aus dem Stand der Technik bekannten integrierten Lackierverfahren die Appearance der resultierenden Beschichtung und sind daher im erfindungsgemäßen Verfahren so kurz wie möglich zu halten.

Durch den Auftrag des Beschichtungsstoffes zur Ausbildung der Decklackschicht bevor die Füllerschicht staubtrocken ist, ist es weiterhin erfindungswesentlich, dass die in i-a) und i-b) verwendeten Beschichtungsstoffe in dem Beschichtungssystem verträglich nach DIN EN ISO 12944-5:2008-01 sind. Im Allgemeinen bedeutet dies, dass beim Auftrag des Decklacks auf die noch nicht staubtrockene Füllerschicht keine unerwünschten Effekte auftreten. Dies bedeutet insbesondere, dass keine negativen physikalischen oder chemischen Wechselwirkungen auftreten, die die Filmbildung oder die Eigenschaften der resultierenden Beschichtung negativ beeinflussen. Unerwünschte Effekte im Sinne dieser Erfindung sind insbesondere die Ausbildung einer diskreten Phasengrenze zwischen der Füllerschicht und der Decklackschicht, wodurch keine partielle Vermischung der Füllerschicht und der Decklackschicht auftritt. Des Weiteren ist es unerwünscht, dass eine Entmischung der jeweiligen Beschichtungsstoffe stattfindet, wodurch beispielsweise ein Gradient des Hauptbindemittels in der jeweiligen Schicht auftreten kann. Weitere unerwünschte Nebeneffekte sind das Auftreten von Ausfällungen im Beschichtungssystem, beispielsweise durch die Bildung von Feststoffen innerhalb des Beschichtungssystems durch (Fällungs-)Reaktionen von Komponenten des Beschichtungsstoff zur Ausbildung der Füllerschicht und Komponenten des Beschichtungsstoff zur Ausbildung der Decklackschicht; Umbenetzungen dergestalt, dass beispielsweise Benetzungsadditive der Füllerschicht in Wechselwirkung mit Benetzungsadditiven der Decklackschicht treten, wodurch es zu einer Destabilisierung von Pigmenten oder Füllstoffen kommt. Im Sinne der vorliegenden Erfindung zählen zu den unerwünschten Effekten auch unerwünschte Oberflächeneffekte der resultierenden Beschichtung, wie beispielsweise das Auftreten von Kratern, Pinholes oder ähnlichen Fehlstellen in der Beschichtung.

Nach der Herstellung der Beschichtungssystems bestehend aus Füllerschicht und Decklackschicht, wird das hergestellte Beschichtungssystem in Schritt ii) unter Ausbildung der aus einer gehärteten Füllerschicht und gehärteten Decklackschicht bestehenden Beschichtung gehärtet. Dabei werden Härtungsbedingungen verwendet, so dass eine gemeinsame Härtung der verträglichen Beschichtungsstoffe zur Ausbildung der Füllerschicht und der Decklackschicht möglich ist.

Die Beschichtungsstoffe zur Ausbildung der Füllerschicht und der Decklackschicht enthalten wenigstens ein farbgebendes Pigment.

Pigmente sind gemäß DIN EN ISO 4618 Farbmittel, die aus feinen Teilchen bestehen, die in der flüssigen Phase des Beschichtungsstoffes unlöslich sind und aufgrund ihrer optischen, schützenden und/oder dekorativen Eigenschaften verwendet werden. Der Begriff Farbmittel schließt hierbei schwarze oder weiße Farbmittel ein. Bevorzugte Pigmente sind farbgebende Pigmente und/oder effektgebende Pigmente und Korrosionsschutzpigmente. Unter effektgebenden Pigmenten sind solche zu verstehen, die einen optischen Effekt geben, der insbesondere auf Lichtreflexion beruht.

Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.
Weiter anorganische farbgebende Pigmente sind Siliziumdioxid, Aluminiumoxid, Aluminiumoxidhydrat, insbesondere Böhmit, Titandioxid, Zirkoniumoxid, Ceroxid und Mischungen hiervon.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Es ist generell möglich, die Verträglichkeit von zwei Beschichtungsstoffen in einem Handversuch zu überprüfen. Dazu werden im Fall von unpigmentierten Beschichtungsstoffen diese in einem durchsichtigen Behälter vermischt. Im Fall von pigmentierten Beschichtungsstoffen wird ein Auszug der Beschichtungsstoffe hergestellt, der keine Pigmente enthält. Bilden die beiden Beschichtungsstoffe beim Vermischen eine klare, homogene und stabile Lösung, sind die Beschichtungsstoffe miteinander verträglich. Durch Abkühlen der Mischungen auf bis zu minus 40 °C und Bewertung der Durchsichtigkeit hinsichtlich Klarheit und Transparenz kann die Verträglichkeit beliebiger Mischungen von Beschichtungsstoffen beziehungsweise beliebiger Kombinationen von Bindemitteln bewertet werden. Neben der Temperatur sind auch die gewählte Abkühlrate, die Kühl- und Haltezeit und die eingesetzten Mengen variabel. Daher sind die Variablen für vergleichende Prüfungen konstant oder hinreichend ähnlich zu halten. Neben einer visuellen Auswertung besteht auch die technische Möglichkeit der "Trübungsmessung" in Analogie zu photometrischen Verfahren. Damit lassen sich Ergebnisse besser quantifizieren.

Verträglichkeit der in i-a) und i-b) verwendeten Beschichtungsstoffe wird vorzugsweise dadurch erzielt, dass das Hauptbindemittel des Beschichtungsstoffs zur Ausbildung der Füllerschicht und das Hauptbindemittel des Beschichtungsstoffs zur Ausbildung der Decklackschicht nach DIN EN ISO 12944-5:2008-01 verträglich sind. Unerwünschte Nebeneffekte in Bezug auf die Verträglichkeit von Bindemitteln sind im Sinne dieser Erfindung insbesondere neben den bereits aufgeführten Nebeneffekten hinsichtlich der Beschichtungsstoffe, dass die Härtung eines Hauptbindemittels die Härtung des anderen Hauptbindemittels nicht dergestalt stört, dass Fehler in der resultierenden Beschichtung, wie beispielsweise Oberflächendefekte, auftreten. Um diesen Sachverhalt zu verdeutlichen, wird nachfolgendes Beispiel aufgeführt: Die Hauptbindemittel der Beschichtungsstoffe zur Ausbildung einer Füllerschicht und einer Decklackschicht sind sehr gut und unbegrenzt mischbar. Das eine Hauptbindemittel enthält vorwiegend sehr reaktive primäre Hydroxylgruppen, wohingegen das andere Hauptbindemittel lediglich wenig reaktive Hydroxylgruppen enthält. Durch die Applikation des Beschichtungsstoffs zur Ausbildung der Decklackschicht auf die Füllerschicht bevor diese Staubtrockenheit erreicht hat, kommt es zur partiellen Vermischung der Beschichtungsstoffe und somit auch zur partiellen Vermischung der Hauptbindemittel, wodurch die beiden Hauptbindemittel auch Bestandteil der jeweilsanderen Schicht wären. Die Härtung durch chemische Vernetzung der Hydroxylgruppen der beiden Hauptbindemittel würde zeitlich sehr unterschiedlich erfolgen, wodurch eine sehr unruhige Oberfläche entstehen würde.

Eine Verträglichkeit wird bevorzugt dadurch erzielt, dass die Hauptbindemittel beider Beschichtungsstoffe auf die gleiche Art und Weise gehärtet werden. Dies bedeutet zunächst, dass beide Beschichtungsstoffe bzw. die darin enthaltenen Hauptbindemittel bevorzugt entweder physikalisch härtend oder selbstvernetzend oder fremdvernetzend sind. Es ist besonders bevorzugt, dass die Hauptbindemittel des Füllers und des Decklacks fremdvernetzend sind.

Im Fall von physikalisch trocknenden Beschichtungsstoffen ist es bevorzugt, dass die physikalische Trocknung bei ähnlichen Bedingungen durchgeführt werden kann. Zu den Trocknungsbedingungen zählen u.a. die Temperatur sowie die Trocknungszeit. Daneben können die relative Luftfeuchtigkeit sowie der an den Beschichtungsstoffen vorbeigeführte Volumenstrom eine wesentliche Rolle spielen.

Beispielsweise können ähnliche Bedingungen zur physikalischen Trocknung durch ähnliche Temperaturen erzielt werden. Ähnliche Temperaturen in Bezug auf die physikalische Härtung bedeutet, dass sich die Härtungstemperaturen der Beschichtungsstoffe vorzugsweise nicht um mehr als 30 °C, bevorzugter 20 °C, besonders bevorzugt 5 °C, unterscheiden. Es ist ganz besonders bevorzugt, dass die Temperaturen, bei denen der Füller und der Decklack physikalisch trocknen, identisch sind.

Es weiterhin ganz besonders bevorzugt, dass die Trocknungsbedingungen im Allgemeinen, bei denen Füller und Decklack physikalisch trocknen, identisch sind.

Werden Beschichtungsstoffe zur Ausbildung der Füllerschicht und der Decklackschicht verwendet, die als Hauptbindemittel selbstvernetzende Bindemittel enthalten, ist es bevorzugt, dass diese bei ähnlichen Härtungsbedingungen härten. Bei selbstvernetzenden Bindemitteln ist es beispielsweise möglich, dass diese eine oder mehrere blockierte Vernetzerkomponenten aufweisen, die bei erhöhten Temperaturen unter Ausbildung einer reaktiven Vernetzerkomponente deblockieren. In diesem Fall ist es bevorzugt, dass die Vernetzerkomponenten der Hauptbindemittel ähnliche Deblockierungsbedingungen, insbesondere hinsichtlich Deblockierungstemperatur und Zeit aufweisen. Es ist ganz besonders bevorzugt, dass die Härtungstemperatur des Füllers und Decklacks identisch sind. Selbstvernetzende Bindemittel können beispielsweise auch durch die Einwirkung aktinischer Strahlung gehärtet werden. In diesem Fall ist es bevorzugt, dass die zur Härtung der in den Beschichtungsstoffen enthaltenen Bindemittel benötigte Strahlung in einem ähnlichen Wellenlängenbereich liegt.

Kommen in den Beschichtungsstoffen als Hauptbindemittel Bindemittel zum Einsatz, die fremdvernetzende sind, ist es bevorzugt, dass das Verhältnis der reaktiven Gruppen der Vernetzerkomponente zu den reaktiven Gruppen der zu vernetzenden Komponente im Hauptbindemittel der beiden Beschichtungsstoffe ähnlich ist. Ähnlich bedeutet in diesem Zusammenhang, dass sich das Verhältnis der reaktiven Gruppen zueinander vorzugsweise nicht um mehr als 20 %, bevorzugter 10 %, besonders bevorzugt 5 %, unterscheidet. Ganz besonders bevorzugt ist das Verhältnis der reaktiven Gruppen der Vernetzerkomponente zu den reaktiven Gruppen der zu vernetzenden Komponente der Bindemittel identisch. Es ist weiterhin bevorzugt, dass die reaktiven Gruppen der Vernetzerkomponenten sowie die reaktiven Gruppen der zu vernetzenden Komponenten der Bindemittel der Beschichtungsstoffe sich chemisch möglichst ähnlich, besonders bevorzugt chemisch identisch sind.

Die zuvor beschriebenen bevorzugten Ausführungen zeigen exemplarisch wie eine Verträglichkeit der Hauptbindemittel der Beschichtungsstoffe zur Herstellung der Füllerschicht und der Decklackschicht erzielt werden kann. Eine Verträglichkeit der Hauptbindemittel der beiden Beschichtungsstoffe wird vorzugsweise dadurch erzielt, dass das Hauptbindemittel des Beschichtungsstoffs zur Ausbildung der Füllerschicht und das Hauptbindemittel des Beschichtungsstoffs zur Ausbildung der Decklackschicht der gleichen Bindemittelklasse angehören.

Der Begriff der Bindemittelklasse bedeutet im Zusammenhang dieser Erfindung, dass die Hauptbindemittel zur gleichen chemischen Stoffklasse gehören. Chemische Stoffklassen sind im Sinne dieser Erfindung beispielsweise Polykondensationsharze, wie Alkydharze, gesättigte und ungesättigte Polyesterharze, Polyamide, Polyimide, Silikonharze sowie Vernetzerharze, wie Phenolharze und Harnstoffharze. Des Weiteren stellen die Polyadditionsharze, wie beispielsweise Polyurethane oder Epoxidharze, und Polymerisationsharze, wie beispielsweise Polyolefine, Polyvinylverbindungen oder Poly(meth)acrylate, eine chemische Stoffklasse dar.

Vorzugsweise werden die Hauptbindemittel der Beschichtungsstoffe ausgewählt aus der Gruppe bestehend aus isocyanatvernetzenden polyhydroxylgruppenhaltigen Polyester- und Polyacrylatharzen und deren Mischungen, besonders bevorzugt aus polyhydroxylgruppenhaltigen Polyacrylatharzen.

Es ist ganz besonders bevorzugt, dass die Hauptbindemittel der Beschichtungsstoffe zur Herstellung der Füllerschicht und der Decklackschicht identisch sind.

Vorzugsweise enthalten die Beschichtungsstoffe zur Ausbildung der Füllerschicht und der Decklackschicht als Lösemittel im Wesentlichen organische Lösemittel oder sind im Wesentlichen wässrig, wobei die Beschichtungsstoffe abhängig voneinander als Lösemittel entweder im Wesentlichen organische Lösemittel enthalten oder im Wesentlichen wässrig sind. Dabei ist im Allgemeinen zu beachten, dass die Lösemittel unter den gewählten Reaktionsbedingungen nicht reaktiv sind oder deren Reaktivität gegenüber den Reaktionspartnern zu vernachlässigen ist und in denen die Reaktanden und die Reaktionsprodukte zumindest teilweise löslich sind.

Unter dem Ausdruck "enthalten im Wesentlichen organische Lösemittel" im Zusammenhang mit dem erfindungsgemäßen Verfahren werden vorzugsweise solche Beschichtungsstoffe verstanden, die als Lösemittel organische Lösemittel als Hauptkomponente enthalten und somit im Wesentlichen frei von Wasser sind. Gegebenenfalls können die Beschichtungsstoffe jedoch Wasser in geringen Anteilen enthalten. Vorzugsweise beträgt der Anteil an Wasser höchstens 1,0 Gew.-%, besonders bevorzugt höchstens 0,5 Gew.-%, ganz besonders bevorzugt höchstens 0,1 Gew.-%, insbesondere höchstens 0,01 Gew.-% jeweils bezogen auf den Gesamtanteil der in den Beschichtungsstoffen enthaltenen Lösemitteln. Beispiele für organische Lösemittel seien heterocyclische, aliphatische oder aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon (MEK), Methylisobutylketon (MIBK), Aceton, Isophoron oder Mischungen davon genannt. Besonders bevorzugt werden die organischen Lösemittel ausgewählt aus der Gruppe bestehend aus 2-Heptanon (MAK), Butylglykolacetat (BGA), Butylacetat sowie deren Mischungen.

Unter dem Begriff "im Wesentlichen wässrig" im Zusammenhang mit dem erfindungsgemäßen Verfahren werden vorzugsweise solche Beschichtungsstoffe verstanden, die als Lösemittel Wasser als Hauptkomponente enthalten und somit im Wesentlichen frei von organischen Lösemitteln sind. Gegebenenfalls können die Beschichtungsstoffe jedoch wenigstens ein organisches Lösemittel in geringen Anteilen enthalten. Als Beispiele für solche organischen Lösemittel sind die bereits zuvor aufgeführten organischen Lösemittel zu nennen. Vorzugsweise beträgt der Anteil der organischen Lösemittel höchstens 1,0 Gew.-%, besonders bevorzugt höchstens 0,5 Gew.-%, ganz besonders bevorzugt höchstens 0,1 Gew.-%, insbesondere höchstens 0,01 Gew.-% jeweils bezogen auf den Gesamtanteil der in den Beschichtungsstoffen enthaltenen Lösemitteln.

Es ist besonders bevorzugt, dass die Beschichtungsstoffe zur Ausbildung der Füllerschicht und der Decklackschicht als Lösemittel im Wesentlichen organische Lösemittel enthalten. Dabei ist es weiterhin bevorzugt, dass die Beschichtungsstoffe ähnliche Lösemittel bzw. Lösemittelgemische, besonders bevorzugt identische Lösemittel bzw. Lösemittelgemische enthalten. Ähnlichkeit der Lösemittel bzw. deren Gemische bedeutet insbesondere, dass diese eine ähnliche Polarität aufweisen.

Es ist ganz besonders bevorzugt, dass sowohl die Hauptbindemittel als auch die Lösemittel der Beschichtungsstoffe zur Ausbildung der Füllerschicht und der Decklackschicht identisch sind.

Vorzugsweise enthält der Beschichtungsstoff zur Ausbildung der Füllerschicht Füllstoffe.

Füllstoffe sind nach DIN EN ISO 4618 Materialien in körniger oder Pulverform, die in der flüssigen Phase eines Beschichtungsstoffs unlöslich sind und verwendet werden, um bestimmte physikalische Eigenschaften zu erreichen oder zu beeinflussen. Da es zwischen Pigmenten und Füllstoffen hinsichtlich ihres Verwendungszwecks zu Überschneidungen kommen kann, wird häufig der Brechnungsindex zu deren Unterscheidung herangezogen. Dieser liegt bei Füllstoffen unterhalb von 1,7, weshalb diese Produktklasse kein nennenswertes Streu- und Deckvermögen erreicht.

Vorzugsweise weisen die Beschichtungsstoffe zur Ausbildung der Füllerschicht und der Decklackschicht jeweils einen Festkörperanteil von mindestens 40 Gew.-%, bevorzugter von mindestens 50 Gew.-%, ganz besonders bevorzugt von 65 Gew.-%, auf. Dies bedeutet, dass es sich bei den verwendeten Beschichtungsstoffen zur Ausbildung der Füllerschicht und der Decklackschicht vorzugsweise um sogenannte High-Solid (HS) oder bevorzugter um Ultra-High-Solid (UHS) Beschichtungsstoffe handelt. Durch den vorzugsweise hohen Festkörpergehalt kann gewährleistet werden, dass ein Auftrag der gewünschten Schichtdicken mit einem Spritzgang möglich ist.

Eine allgemein gültige Definition für die Begriffe MS (medium solid), HS (high solid) oder UHS (Ultra-high-solid) existiert nicht. Bei Lackieranlagen ohne thermische Abluftreinigung (Nachverbrennung) sollte aus Gründen des Umweltschutzes der Lösemittelgehalt in spritzfertigen Mischungen so niedrig wie möglich gehalten werden. In der EU (aber auch anderen Regionen) wurden daher je nach Anwendungsgebiet unterschiedliche Grenzwerte erlassen, um den Betrieb solcher Anlagen zu genehmigen. Nach dieser Definition sind MS-Lacke mit einem VOC-Wert > 420 g/l, HS-Lacke < 420 g/l und UHS < 350 g/l gemeint. Die Bestimmung erfolgt z.B. nach DIN EN ISO 11890 oder nach ASTM D2369 und berechnet sich nach der Formel:

$$\text{VOC (g/l)} = (\text{Masse flüchtiger Anteile [g]} - \text{Masse Wasser [g]}) / (\text{Volumen Lack [l]} - \text{Volumen Wasser [l]}),$$

wobei eine organische Verbindung als flüchtig eingestuft wird, wenn sie bei 293,15 K einen Dampfdruck von 0,01 KPa aufweist.

Da der Anteil Wasser jeweils abgezogen wird und der Bezug auf das Volumen des wasserfreien Beschichtungsstoff erfolgt, ergibt sich eine Vergleichbarkeit der Emission bei gleicher Applikation (Auftragswirkungsgrad, Anzahl Spritzgänge,...) und gleicher lackierter Fläche selbst bei unterschiedlich pigmentierten Lacken. Eine entsprechende Definition gilt für die vorliegende Erfindung.

Vorzugsweise werden die Beschichtungsstoffe zur Ausbildung der Füllerschicht und der Decklackschicht dahingehend rheologie-optimiert, dass sie eine ausreichende Läufer- und Kocherstabilität aufweisen. Dies wird vorzugsweise erzielt durch den Einsatz von Rheologiemitteln und gegebenenfalls Entschäumern. Beispiele für Rheolgiemittel, die vorzugsweise im erfindungsgemäßen Verfahren zur Steuerung der rheologischen Eigenschaften der Beschichtungsstoffe eingesetzt werden können, sind pyrogene Kieselsäuren, Bentonite sowie harnstofffunktionalisierte Polymere.

Bevorzugt erfolgt die Applikation des Beschichtungsstoffs zur Ausbildung der Füllerschicht und des Beschichtungsstoff zur Ausbildung der Decklackschicht durch pneumatisches und/oder elektrostatisches Spritzen (ESTA). Diese Operationen können durch manuelle Operationen beispielsweise der Vorlackierung von kritischen Stellen ergänzt werden.

Bevorzugt werden die Beschichtungsstoffe zur Ausbildung der Füllerschicht und der Decklackschicht jeweils mit einer solchen Nassschichtdicke ausgebracht, dass eine Trockenfilmdicke der gehärteten Füllerschicht von 25 bis 35 $\mu$m und eine Trockenfilmdicke der gehärteten Decklackschicht von 40 bis 80 $\mu$m resultieren.

Die Trockenfilmdicke der gehärteten Füllerschicht und der gehärteten Decklackschicht wird mikroskopisch anhand von Querschliffen bestimmt. Dazu werden die erzeugten gehärteten Schichten mittels geeigneter Werkzeuge, beispielsweise mit einem Skalpell vom Substrat gelöst. Die so erhaltenen Filmabschnitte werden in einen Objektträger fixiert, so dass die Beschichtung mikroskopiert werden kann (sogenannter Querschnitt). Durch entsprechend kalibrierte Mikroskopie in Zusammenhang mit bildanalytischen Auswertungen lassen Schichtdickenbestimmungen mit einer Genauigkeit von plus/minus 1 $\mu$m durchführen.

Das erfindungsgemäße Verfahren eignet sich insbesondere zur Herstellung von Beschichtungen auf Personenkraftwagen und Nutzfahrzeugen, wie Lastkraftwagen, Vans oder Omnibussen. Vorzugsweise ist das Substrat daher eine Karosserie oder eine Kabine eines Kraftfahrzeugs oder ein Teil einer solchen. Besonders bevorzugt ist das Substrat eine Karosserie oder eine Kabine eines Personenkraftwagens oder eines Nutzfahrzeugs, insbesondere von Lastwagen, Vans oder Omnibussen.

Die vorliegende Erfindung betrifft weiterhin ein Substrat beschichtet mit einer gehärteten Füllerschicht und einer gehärteten Decklackschicht bestehenden Beschichtung, welche durch das erfindungsgemäße Verfahren hergestellt wurde.

Die vorstehenden Ausführungen zeigen, dass durch das erfindungsgemäße Verfahren die Komplexität zur Herstellung einer Beschichtung enorm verringert werden kann. So kann beispielsweise bei 2-Komponentenbeschichtungsstoffen, die eine identische Vernetzerkomponente im Füller und im Decklack verwenden, durch das erfindungsgemäße Verfahren anlagetechnisch auf eine zusätzliche, separate Leitung für die Vernetzerkomponente verzichtet werden. Des Weiteren können die Beschichtungsstoffe zur Ausbildung der Füllerschicht und zur Ausbildung der Decklackschicht in einer Anlage verarbeitet werden. Dadurch ist eine gravierende Kapazitätserweiterung durch das Einsparen einer separaten Linie zur Applikation der Füllerschicht möglich, so dass damit eine deutliche Reduktion der Investitionskosten pro beschichtete Fläche realisiert werden kann.

Die angestrebte Verringerung von Fehlermöglichkeiten, der Prozesszeiten und -kosten wird durch die Einsparung von fehleranfälligen Prozessschritten erreicht. So entfallen das Ablüften bzw. die Härtung der Füllerschicht im Ofen, der eventuell nötige Korrekturschliff der gehärteten Füllerschicht, die Zwischenlagerung von mit einer Füllerschicht beschichten Karosserie bzw. deren Teilen in Pufferzonen sowie die gegebenenfalls notwendige Reinigung dieser vor der Applikation des Beschichtungsstoff zur Ausbildung der Decklackschicht. Dadurch können Oberflächenstörungen durch unsachgemäße Applikation bzw. eine nicht optimale Abstimmung der Beschichtungsstoffe verringert werden, wie beispielsweise die Ausbildung von Kochern in lösemittelbasierten Decklackschichten durch Wasser aus einer unzureichend abgelüfteten bzw. getrockneten wässrigen Füllerschicht. Auch wird durch das erfindungsgemäße Verfahren das Auftreten von Benetzungsstörungen (Kratern) auf Untergründen mit niedriger Oberflächenenergie minimiert.

Die mit dem erfindungsgemäßen Verfahren hergestellten Beschichtungen zeigen ein Eigenschaftsprofil, welches mindestens vergleichbar ist zu Beschichtungen, die nach aus dem Stand der Technik bekannten Verfahren hergestellt wurden. Beschichtungen, die nach dem erfindungsgemäßen Verfahren hergestellt wurden, zeigen im Vergleich zu den jeweils mit gleichen Beschichtungsstoffen einzeln beschichtet und eingebrannten Schichten eine deutlich bessere Appearance z.B. auch an senkrechten Flächen.

Im Folgenden wird die vorliegende Erfindung durch nachstehende Beispiele zusätzlich erläutert.

Sofern nicht anders ausgeführt, handelt es sich bei Angaben in Teilen um Gewichtsteile und bei Angaben in Prozenten um Gewichtsprozente.

Soweit hierin nicht anders angegeben, beziehen sich alle Norm-Angaben auf die zum Anmeldetag der vorliegenden Erfindung aktuelle Norm.

Abkürzungen und Ausgangsstoffe

| | |
|---|---|
| TMP | 1,1,1-Tris(hydroxymethyl)propan |
| HHPSA | Hexahydrophthalsäureanhydrid |
| Cardura E10® | Glycidylester von Neodecansäuren; Hersteller Momentive |
| HDI | Hexamethylendiisocyanat |
| IPDI | Isophorondiisocyanat |

Der **nicht-flüchtige Anteil,** d.h. der Festkörpergehalt (Festkörperanteil), der Beschichtungsstoffe wird gemäß DIN EN ISO 3251 (Datum: Juni 2008) bestimmt. Die Prüfdauer beträgt dabei 60 Minuten bei einer Temperatur von 130°C. Der nach Trocknung verbleibende nichtflüchtige Anteil wird zur Einwaage ins Verhältnis gesetzt und gibt den prozentualen Festkörper der Beschichtungsmittelzusammensetzung an.

**Bestimmung der OH-Zahl:** Die OH-Zahl errechnet sich über die Stöchiometrie der eingesetzten Komponenten. Die OH-Zahl errechnet sich aus den eingesetzten OHfunktionellen Komponenten abzüglich der erreichten Säurezahl, zuzüglich der durch die Ringöffnungsreaktion entstehenden weiteren OH-Gruppen.

**Bestimmung der Säure-Zahl:** Die Säure-Zahl wird durch Titration mit einer KOH-Lösung nach DIN EN ISO 2114 durchgeführt. Die Säurezahl gibt hierbei die Menge an Kaliumhydroxid in mg an, die zur Neutralisation von 1 g der jeweiligen Verbindung verbraucht wird.

Die angegebenen OH-Zahlen sowie Säure-Zahlen beziehen sich jeweils auf den Festkörperanteil des Beschichtungsstoffs.

**Bestimmung des Molekulargewichts:** Molekulargewichtsbestimmungen werden mittels Gelpermeationschromatographie (GPC) bei 40 °C mit einer Hochdruckflüssigkeitschromatographie-Pumpe und einem Brechungsindexdetektor durchgeführt. Als Elutionsmittel wird Tetrahydrofuran mit einer Elutionsgeschwindigkeit von 1 ml/min verwendet. Die Kalibrierung wird mittels eines Poly-MMA Standards durchgeführt. Das zahlenmittlere Molekulargewicht Mn, das gewichtsmittlere Molekulargewicht Mw und Mp werden bestimmt, wobei sich der Polymolekularitätsindex Mp berechnet aus Mp = Mw/Mn.

**Bestimmung der Glasübergangstemperatur T$_g$** wird nach DIN 53765 durchgeführt.

Die **Messung der Viskosität** wurde bei 23°C mit einem Rotationsviskosimeter der Fa. Brookfield, Typ CAP 2000+, Spindel 3 mit einer Scherrate von 1250 s$^{-1}$ durchgeführt.

In den nachfolgenden Ausführungsbeispielen erfolgte die Applikation jeweils mittels ESTA auf KTL beschichtetem Substrat; Trockenschichtdicken: Füller jeweils 30 $\mu$m, Decklack jeweils 50 $\mu$m.

**Stand der Technik:** Vergleichsbeispiel Probe 1 mit einem handelsüblichen Füller (Füller 1) und einem handelsüblichen 2-K-Decklack weiß (Decklack 1) (beide von BASF Coatings GmbH Münster):

**Füller 1** ist ein 1-K-Wasserfüller auf Basis eines Polyesters, der mit einem Melaminharz vernetzt wurde. Alternativ können handelsübliche lösemittelhaltige Füller verwendet werden, wie beispielsweise mit Polyamin vernetzte Epoxidharze oder mit Oligoisocyanat vernetzte OH-funktionelle Acrylatharze.

**Decklack 1** ist ein 2-K-Decklack (weiß) auf Basis eines OH-funktionelles Acrylatharzes, welches mit Oligoisocyanat vernetzt wurde (in der Zusammensetzung ähnlich der Decklackzusammensetzung des Decklacks 2).

**Füller und Decklack für das erfindungsgemäße Verfahren:** 2-K-Füller (Füller 2) und 2-K- Decklack (weiß) (Decklack 2)

Beschreibung der Einzelsynthesen zur Herstellung der Bindemittelzusammensetzung für das Ausführungsbeispiel im erfindungsgemäßen Verfahren:

**Polyester:**

Analog: Lit: Research Disclosure (2006), 505(May), P520-P521 (No. 505044) CODEN: RSDSBB; ISSN: 0374-4353

Analog zum Beispiel A der oben genannten Literaturstelle werden 1 mol TMP mit 2 mol HHPSA, in einer zweiten Stufe dann das daraus resultierende Produkt mit 2 mol Cardura E 10® bei 120°C umgesetzt. Nach weiteren 2h bei dieser Temperatur wird abgekühlt und das Produkt mit einem Gemisch aus 2 Teilen Xylol und 1 Teil SOLVENTNAPHTHA 160/180 auf einen Festkörpergehalt von 84 $\pm$ 1% angelöst. Man erhält eine zähflüssige Lösung mit einer Viskosität von 3400 - 4800mPas.

**OH-funktionelles Acrylat 1:**

OH-funktionelles Acrylat polymerisiert in SOLVENTNAPHTHA 160/180 mit einer OH-Zahl von 115 - 125 mg KOH/g, einer T$_g$ von 33°C, einer Säurezahl von 5 - 8 mg KOH/g, einem zahlenmittleren Molekulargewicht von 1200 - 2000 Dalton und einem gewichtsmittleren Molekulargewicht von 3300 - 5100 Dalton (gemessen gegen Poly-Methylmethacrylat als Standard); einem Festkörpergehalt von 65 $\pm$ 1. Die Polymerisationstemperatur beträgt 160°C unter Druck (3 bar abs.).

Das Lösungsmittel ist ein Gemisch aus SOLVENTNAPHTHA 160/180 und n-Butylacetat im Verhältnis 4:1. Das OH-Acrylat weist eine Viskosität von 650-1000 mPas auf. Die Monomerenzusammensetzung besteht zu etwa gleichen Teilen aus Styrol, Hydroxyethylmethacrylat, Methylmethacrylat sowie Isodecylmethacrylat.

**OH-funktionelles Acrylat 2:**

OH-funktionelles Acrylat polymerisiert in Butylacetat mit einer OH-Zahl von 152 - 160 mg KOH/g, einer T$_g$ von 55°C, einer Säurezahl von 8 - 10 mg KOH/g, einem zahlenmittleren Molekulargewicht von 1600 - 2200 Dalton und einem gewichtsmittleren Molekulargewicht von 3900 - 4500 Dalton (gemessen gegen Poly-Methylmethacrylat als Standard); einem Festkörpergehalt von 55 $\pm$ 1%. Das Lösungsmittel ist ein Gemisch aus SOLVENTNAPHTHA 160/180 und n-Butylacetat im Verhältnis 7:1. Das OH-Acrylat weist eine Viskosität von 900 -1300 mPas auf. Die Monomerenzusammensetzung besteht zu gleichen Teilen aus Styrol, Butylmethacrylat, Hydroxyethylmethacrylat, Hydroxypropylmethacrylat sowie Cyclohexylmethacrylat und einem geringen Anteil an Acrylsäure.

**OH-funktionelles Acrylat 3:**

OH-funktionelles Acrylat polymerisiert in Butylacetat mit einer OH-Zahl von 115 - 125 mg KOH/g, einem T$_g$ von 33°C, einer Säurezahl von 5 - 8 mg KOH/g, einem zahlenmittleren Molekulargewicht von 1300 - 1500 Dalton und einem gewichtsmittleren Molekulargewicht von 3700 - 4500 Dalton (gemessen gegen Poly-Methylmethacrylat als Standard); einem Festkörpergehalt von 78 $\pm$ 1% in Butylacetat. Die Polymerisationstemperatur beträgt 160°C unter Druck (3 bar abs.). Man erhält eine zähflüssige Lösung mit einer Viskosität von 5800 - 6300mPas.Die Monomerenzusammensetzung besteht zu etwa gleichen Teilen aus Styrol, Hydroxiethylmethacrylat, Methylmethacrylat sowie Isodecylmethacrylat.

Ausführungsbeispiel für eine Füller- und eine Decklackformulierung für das erfindungsgemäße Verfahren (Füller 2 und Decklack 2)

| | Füller 2 | Decklack 2 |
|---|---|---|
| Polyester (fest) | 15,5 | 16 |
| OH-Acrylatharz 1 und 2 (fest) | 10 | 13,1 |
| OH-Acrylatharz 3 (fest) | 11 | 9,4 |
| handelsübliche Dispergieradditive (Disperbyk der Firma Byk) | 1 | 0,8 |
| Füllstoff 1 Talkum | 5 | 0 |
| Füllstoff 2 Kreide | 16 | 0 |
| Füllstoff 3 Zinkoxid | 12 | 0 |
| Pigment 1 Titandioxid | 3 | 33,7 |
| Pigment 2 Russ | 0,01 | 0,2 |
| Additive (Lichtschutzmittel, UV-Absorber, HALS) | 0 | 0,5 |
| Thixotropieradditiv 1 Aerosil | 0,1 | 0,2 |
| Thixotropieradditiv 2 Bentone | 0,3 | 0,2 |
| Katalysator | 0,02 | 0,02 |
| Lösungsmittel Acetate, Ketone, Aromaten, Aliphaten | 25 | 25,83 |
| Addtitive (Verlauf, Benetzung) | 0,07 | 0,05 |
| | 100 | 100 |

Sowohl Füller als auch Decklack wurden mit einem handelsüblichen aliphatischen Oligoisocyanat auf Basis von Hexamethylendiisocyanat (HDI) vernetzt. Alternativ kann die Vernetzung auch mit Isophorondiisocyanat (IPDI) durchgeführt werden.

Die Applikation selbst erfolgte jeweils unter identischen Bedingungen, mit ESTA (elektrostatischer Applikation), bei gleichem Abstand, gleichen Ausflussraten, Zuggeschwindigkeiten, Drehzahl der Glocke usw.

Erfindungsgemäße Proben: In den erfindungsgemäßen Beispielen 2, 3 und 4 wird der Beschichtungsstoff zur Ausbildung der Decklackschicht appliziert, bevor der Beschichtungsstoff zur Ausbildung der Füllerschicht die Trockenstufe 1 nach DIN 53150:2002-09 erreicht hat. Die Proben unterscheiden sich in der Flash-Off Zeit der Füllerschicht.

Vergleichsproben mit Füller 1 bzw. Füller 2: der Decklack wurde nach Härtung des Füllers auf die jeweils gehärtete Füllerschicht appliziert.

Probe 1: Füller 1 thermisch gehärtet vor Decklack-Applikation
Probe 5: Füller 2 thermisch gehärtet vor Decklack-Applikation

| Probe | 1* | 2 | 3 | 4 | 5* |
|---|---|---|---|---|---|
| Füller | Füller 1 | Füller 2 | Füller 2 | Füller 2 | Füller 2 |
| Flash-Off-Zeit der Füllerschicht | | 240 sek. | 480 sek. | 600 sek. | |
| Härtung der Füllerschicht | x | | | | x |

(fortgesetzt)

| Probe | 1* | 2 | 3 | 4 | 5* |
|---|---|---|---|---|---|
| Decklack | Decklack 1 | Decklack 2 | Decklack 2 | Decklack 2 | Decklack 2 |
| LW | 5,6 | 3,4 | 5,4 | 7,2 | 17,5 |
| SW | 3,6 | 5,4 | 6,5 | 6,9 | 2,3 |
| N1 | 4,9 | 3,6 | 4,8 | 5,5 | 8 |
| N3 | 5,2 | 3,8 | 5,1 | 5,8 | 8,3 |
| CF | 63,5 | 70,2 | 64,4 | 60,6 | 44,6 |
| DOI | 93,1 | 93,3 | 93,2 | 93 | 93,6 |
| * nicht erfindungsgemäß | | | | | |

Bei der nicht erfindungsgemäßen Kombination des Füllers 1 mit Decklack 1 oder 2 (nicht in der Tabelle aufgeführt) und einer Applikation der Decklacke auf die Füllerschicht bevor diese Staubtrockenheit erreicht hat nach den in der Tabelle angegebenen Flash-Off- Zeiten, ergaben sich matte Decklackoberflächen. Dies entspricht einem unerwünschten Nebeneffekt. Die Oberflächeneigenschaften einer matten Oberfläche können mit einem wave-scan Gerät nicht vermessen werden.

Die Messung der optischen Eigenschaften erfolgte mit einem handelsüblichen wave-scan-dual-Gerät der Firma Byk Gardener. Die damit auf glänzenden Oberflächen erhaltenen Messwerte wurden mit der mitgelieferten Software umgerechnet in die nachfolgenden Werte:

- long wave (LW)-, short wave (SW)-Werte ,
- N1 - und N3 - Werte (nach BMW Skalen, die die Betrachtung der Oberfläche aus 1 bzw. 3 m Abstand repräsentieren)
- CF-Werte (nach FORD Skalen, die sich zusammensetzen aus Luster, Sharpness und orange peel)
- DOI (entspricht ungefähr dem Glanz bei 20 ° Betrachtungswinkel)

Dabei gilt für die Bewertung des optischen Ergebnisses, das bessere optische Eigenschaften vorliegen:

- Je kleiner LW und SW und / oder wenn LW < SW

- Je kleiner N1 und N3

- Je größer CF

Die Ergebnistabelle zeigt, dass Probe 2 (erfindungsgemäße Kombination aus Füller 2 und Decklack 2 mit kürzester Ablüftzeit) die besten optischen Eigenschaften aufweist. Eine Verlängerung der Ablüftzeit verschlechtert die optischen Eigenschaften entgegen der bisherigen Erfahrung mit bekannten Verfahren aus dem Stand der Technik. Insgesamt zeigt sich, dass alle erfindungsgemäßen Proben gute optische Eigenschaften aufweisen. Insbesondere zeigen die Beschichtung hergestellt nach dem erfindungsgemäßen Verfahren die besten Ergebnisse bezüglich Glanz und Verlauf.

**Patentansprüche**

1. Verfahren zur Herstellung einer aus einer gehärteten Füllerschicht und gehärteten Decklackschicht bestehenden Beschichtung auf einem Substrat unter

　　i) Herstellung eines Beschichtungssystems, wobei

　　　　i-a) in einem ersten Schritt auf das unbehandelte oder mindestens mit einer gehärteten Tauchlackschicht beschichtete Substrat ein wenigstens ein farbgebendes Pigment enthaltender Beschichtungsstoff, enthaltend mindestens ein selbstvernetzendes, fremdvernetzendes oder physikalisch trocknendes Bindemittel als Hauptbindemittel, unter Ausbildung einer Füllerschicht aufgebracht wird,
　　　　i-b) in einem zweiten Schritt auf die Füllerschicht ein weiterer wenigstens ein farbgebendes Pigment enthaltender Beschichtungsstoff, enthaltend mindestens ein selbstvernetzendes, fremdvernetzendes oder physikalisch trocknendes Bindemittel als Hauptbindemittel, unter Ausbildung einer Decklackschicht aufgebracht wird, und

ii) das in Schritt i) hergestellte Beschichtungssystem unter Ausbildung der Beschichtung gehärtet wird, **dadurch gekennzeichnet, dass** die in i-a) und i-b) verwendeten Beschichtungsstoffe in dem Beschichtungssystem verträglich nach DIN EN ISO 12944-5:2008-01 sind, und
der Auftrag des Beschichtungsstoffs zur Ausbildung der Decklackschicht in i-b) erfolgt, bevor der Beschichtungsstoff zur Ausbildung der Füllerschicht in i-a) die Trockenstufe 1 nach DIN 53150:2002-09 erreicht hat, wobei die Trockenstufe nach EN ISO 9117-3:2010 bestimmt wird.

2. Verfahren zur Herstellung einer aus Füllerschicht und Decklackschicht bestehenden Beschichtung nach Anspruch 1, **dadurch gekennzeichnet, dass** das Hauptbindemittel des Beschichtungsstoffs zur Ausbildung der Füllerschicht und das Hauptbindemittel zur Ausbildung der Decklackschicht verträglich nach DIN EN ISO 12944-5:2008-01 sind.

3. Verfahren nach Anspruch 1 oder 2, **dadurch gekennzeichnet, dass** das Hauptbindemittel des Beschichtungsstoffs zur Ausbildung der Füllerschicht und das Hauptbindemittel des Beschichtungsstoffs zur Ausbildung der Decklackschicht der gleichen Bindemittelklasse angehören.

4. Verfahren nach einem der Ansprüche 1 bis 3, **dadurch gekennzeichnet, dass** das Hauptbindemittel des Beschichtungsstoffs zur Ausbildung der Füllerschicht und das Hauptbindemittel des Beschichtungsstoffs zur Ausbildung der Decklackschicht identisch sind.

5. Verfahren nach einem der Ansprüche 1 bis 4, wobei die Beschichtungsstoffe zur Ausbildung der Füllerschicht und der Decklackschicht als Lösemittel im Wesentlichen organische Lösemittel enthalten oder im Wesentlichen wässrig sind, **dadurch gekennzeichnet, dass** die Beschichtungsstoffe abhängig voneinander als Lösemittel entweder im Wesentlichen organische Lösemittel enthalten oder im Wesentlichen wässrig sind.

6. Verfahren nach Anspruch 5, **dadurch gekennzeichnet, dass** die Beschichtungsstoffe zur Ausbildung der Füllerschicht und der Decklackschicht als Lösemittel im Wesentlichen organische Lösemittel enthalten.

7. Verfahren nach einem der Ansprüche 1 bis 6, **dadurch gekennzeichnet, dass** sowohl die Hauptbindemittel als auch die Lösemittel der Beschichtungsstoffe zur Ausbildung der Füllerschicht und der Decklackschicht identisch sind.

8. Verfahren einem der Ansprüche 1 bis 7 **dadurch gekennzeichnet, dass** das Hauptbindemittel der Beschichtungsstoffe zur Ausbildung der Füllerschicht und der Decklackschicht ausgewählt wird aus der Gruppe bestehend aus isocyanatvernetzenden polyhydroxylgruppenhaltigen Polyester- und Polyacrylatharzen und deren Mischungen.

9. Verfahren nach einem der Ansprüche 1 bis 8, **dadurch gekennzeichnet, dass** die Beschichtungsstoffe zur Ausbildung der Füllerschicht und der Decklackschicht einen Festkörperanteil von mindestens 40 Gew.-% aufweisen.

10. Verfahren nach einem der Ansprüche 1 bis 9, **dadurch gekennzeichnet, dass** der Beschichtungsstoff zur Ausbildung der Füllerschicht und der Beschichtungsstoff zur Ausbildung der Decklackschicht durch pneumatisches Spritzen und/oder elektrostatisches Spritzen aufgebracht werden.

11. Verfahren nach einem der Ansprüche 1 bis 10, **dadurch gekennzeichnet, dass** die Beschichtungsstoffe zur Ausbildung der Füllerschicht und der Decklackschicht jeweils mit einer solchen Nassschichtdicke aufgebracht werden, dass eine Trockenfilmdicke der gehärteten Füllerschicht von 25 bis 35 $\mu$m und eine Trockenfilmdicke der gehärteten Decklackschicht von 40 bis 80 $\mu$m resultieren.

12. Verfahren nach einem der Ansprüche 1 bis 11, **dadurch gekennzeichnet, dass** das Substrat eine Karosserie eines Kraftfahrzeugs oder ein Teil einer solchen ist.

13. Verfahren nach einem der Ansprüche 1 bis 12, **dadurch gekennzeichnet, dass** eine Flash-Off-Zeit zwischen den Schritten i-a) und i-b) 480 Sekunden oder kürzer ist.

14. Substrat, beschichtet mit einer aus einer gehärteten Füllerschicht und gehärteten Decklackschicht bestehende Beschichtung, hergestellt durch ein Verfahren nach einem der Ansprüche 1 bis 13.

**Claims**

1.  Method for producing a coating, consisting of a cured surfacer coat and cured topcoat, on a substrate, including

    i) Production of a coating system by

    i-a) in a first step, applying to the untreated substrate or substrate coated at least with a cured electrodeposition coat, a coating material comprising at least one coloring pigment and comprising at least one self-crosslinking, externally crosslinking, or physically drying binder as main binder, to form a surfacer coat,
    i-b) in a second step, applying, to the surfacer coat, a further coating material comprising at least one coloring pigment and comprising at least one self-crosslinking, externally crosslinking, or physically drying binder as main binder, to form a topcoat, and

    ii) the coating system produced in step i) is cured to form the coating,

    **characterized in that** the coating materials used in i-a) and i-b) in the coating system are compatible according to DIN EN ISO 12944-5:2008-01, and
    the application of the coating material to form the topcoat in i-b) takes place before the coating material for forming the surfacer coat in i-a) has reached drying stage 1 according to DIN 53150:2002-09, the drying stage being determined according to EN ISO 9117-3:2010.

2.  Method for producing a coating consisting of surfacer coat and topcoat according to Claim 1, **characterized in that** the main binder of the coating material for forming the surfacer coat and the main binder for forming the topcoat are compatible according to DIN EN ISO 12944-5:2008-01.

3.  Method according to Claim 1 or 2, **characterized in that** the main binder of the coating material for forming the surfacer coat and the main binder of the coating material for forming the topcoat belong to the same binder class.

4.  Method according to any of Claims 1 to 3, **characterized in that** the main binder of the coating material for forming the surfacer coat and the main binder of the coating material for forming the topcoat are identical.

5.  Method according to any of Claims 1 to 4, wherein the coating materials for forming the surfacer coat and the topcoat comprise, as solvents, substantially organic solvents or are substantially aqueous, **characterized in that** the coating materials, dependently on one another, either comprise, as solvents, substantially organic solvents or are substantially aqueous.

6.  Method according to Claim 5, **characterized in that** the coating materials for forming the surfacer coat and the topcoat comprise, as solvents, substantially organic solvents.

7.  Method according to any of Claims 1 to 6, **characterized in that** both the main binders and the solvents of the coating materials for forming the surfacer coat and the topcoat are identical.

8.  Method according to any of Claims 1 to 7, **characterized in that** the main binder of the coating materials for forming the surfacer coat and the topcoat is selected from the group consisting of isocyanate-crosslinking, polyhydroxyl group-containing polyester and polyacrylate resins and mixtures thereof.

9.  Method according to any of Claims 1 to 8, **characterized in that** the coating materials for forming the surfacer coat and the topcoat have a solids fraction of at least 40 wt%.

10. Method according to any of Claims 1 to 9, **characterized in that** the coating material for forming the surfacer coat and the coating material for forming the topcoat are applied by pneumatic spraying and/or electrostatic spraying.

11. Method according to any of Claims 1 to 10, **characterized in that** the coating materials for forming the surfacer coat and the topcoat are each applied with a wet film thickness so as to result in a dry film thickness of the cured surfacer coat of 25 to 35 $\mu$m and a dry film thickness of the cured topcoat of 40 to 80 $\mu$m.

12. Method according to any of Claims 1 to 11, **characterized in that** the substrate is a body of a motor vehicle or a part thereof.

**13.** Method according to any of Claims 1 to 12, **characterized in that** a flash-off time between steps i-a) and i-b) is 480 seconds or shorter.

**14.** Substrate coated with a coating consisting of a cured surfacer coat and cured topcoat, produced by a method according to any of Claims 1 to 13.

**Revendications**

**1.** Procédé de fabrication d'un revêtement constitué par une couche d'apprêt durcie et une couche de finition durcie sur un substrat avec

i) fabrication d'un système de revêtement,

i-a) dans une première étape, un matériau de revêtement contenant au moins un pigment colorant, contenant au moins un liant auto-réticulant, réticulant sous l'action d'un agent étranger ou à séchage physique en tant que liant principal, étant appliqué sur le substrat non traité ou revêtu au moins avec une couche de vernis par immersion durcie, avec formation d'une couche d'apprêt,

i-b) dans une deuxième étape, un autre matériau de revêtement, contenant au moins un pigment colorant, contenant au moins un liant auto-réticulant, réticulant sous l'action d'un agent étranger ou à séchage physique en tant que liant principal, étant appliqué sur la couche d'apprêt, avec formation d'une couche de finition, et

ii) le système de revêtement fabriqué dans l'étape i) étant durci avec formation du revêtement,

**caractérisé en ce que** les matériaux de revêtement utilisés en i-a) et i-b) dans le système de revêtement sont compatibles selon DIN EN ISO 12944-5:2008-01, et l'application du matériau de revêtement pour la formation de la couche de finition en i-b) a lieu avant que le matériau de revêtement pour la formation de la couche d'apprêt en i-a) ait atteint le niveau de séchage 1 selon DIN 53150:2002-09, le niveau de séchage étant déterminé selon EN ISO 9117-3:2010.

**2.** Procédé de fabrication d'un revêtement constitué par une couche d'apprêt et une couche de finition selon la revendication 1, **caractérisé en ce que** le liant principal du matériau de revêtement pour la formation de la couche d'apprêt et le liant principal pour la formation de la couche de finition sont compatibles selon DIN EN ISO 12944-5:2008-01.

**3.** Procédé selon la revendication 1 ou 2, **caractérisé en ce que** le liant principal du matériau de revêtement pour la formation de la couche d'apprêt et le liant principal du matériau de revêtement pour la formation de la couche de finition appartiennent à la même classe de liants.

**4.** Procédé selon l'une quelconque des revendications 1 à 3, **caractérisé en ce que** le liant principal du matériau de revêtement pour la formation de la couche d'apprêt et le liant principal du matériau de revêtement pour la formation de la couche de finition sont identiques.

**5.** Procédé selon l'une quelconque des revendications 1 à 4, dans lequel les matériaux de revêtement pour la formation de la couche d'apprêt et de la couche de finition contiennent principalement des solvants organiques en tant que solvants ou sont principalement aqueux, **caractérisé en ce qu'**indépendamment l'un de l'autre, les matériaux de revêtement soit contiennent principalement des solvants organiques en tant que solvants, soit sont principalement aqueux.

**6.** Procédé selon la revendication 5, **caractérisé en ce que** les matériaux de revêtement pour la formation de la couche d'apprêt et de la couche de finition contiennent principalement des solvants organiques en tant que solvants.

**7.** Procédé selon l'une quelconque des revendications 1 à 6, **caractérisé en ce qu'**aussi bien les liants principaux, ainsi que les solvants des matériaux de revêtement pour la formation de la couche d'apprêt et de la couche de finition sont identiques.

**8.** Procédé selon l'une quelconque des revendications 1 à 7, **caractérisé en ce que** le liant principal des matériaux de revêtement pour la formation de la couche d'apprêt et de la couche de finition est choisi dans le groupe constitué par les résines de polyester et de polyacrylate contenant des groupes polyhydroxyle réticulant par de l'isocyanate et leurs mélanges.

9. Procédé selon l'une quelconque des revendications 1 à 8, **caractérisé en ce que** les matériaux de revêtement pour la formation de la couche d'apprêt et de la couche de finition présentent une teneur en solides d'au moins 40 % en poids.

10. Procédé selon l'une quelconque des revendications 1 à 9, **caractérisé en ce que** le matériau de revêtement pour la formation de la couche d'apprêt et le matériau de revêtement pour la formation de la couche de finition sont appliqués par pulvérisation pneumatique et/ou pulvérisation électrostatique.

11. Procédé selon l'une quelconque des revendications 1 à 10, **caractérisé en ce que** les matériaux de revêtement pour la formation de la couche d'apprêt et de la couche de finition sont chacun appliqués avec une épaisseur de couche humide telle qu'une épaisseur de film sec de la couche d'apprêt durcie de 25 à 35 $\mu$m et qu'une épaisseur de film sec de la couche de finition durcie de 40 à 80 $\mu$m soient obtenues.

12. Procédé selon l'une quelconque des revendications 1 à 11, **caractérisé en ce que** le substrat est une carrosserie d'un véhicule automobile ou une partie d'une telle carrosserie.

13. Procédé selon l'une quelconque des revendications 1 à 12, **caractérisé en ce que** le temps d'évaporation entre les étapes i-a) et i-b) est de 480 secondes ou moins.

14. Substrat, revêtu avec un revêtement constitué par une couche d'apprêt durcie et une couche de finition durcie, fabriqué par un procédé selon l'une quelconque des revendications 1 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0512562 A2

**In der Beschreibung aufgeführte Nicht-Patentliteratur**

- *Analog: Lit: Research Disclosure,* Mai 2006, ISSN 0374-4353